# EUROPEAN PATENT APPLICATION

(11) **EP 4 694 060 A1**
(43) Date of publication of application: **11.02.2026**
(21) Application number: 23929360.8
(22) Date of filing: 31.03.2023
(51) Int. Cl.: H04L 41/14

(54) **HARDWARE RESOURCE SIMULATION VERIFICATION METHOD, APPARATUS, NETWORK DEVICE AND STORAGE MEDIUM**

(71) Applicant: New H3C Technologies Co., Ltd., Hangzhou, Zhejiang 310052 (CN)
(72) Inventor: XIE, Bin, Beijing 100102 (CN); YANG, Jiangxiong, Beijing 100102 (CN)
(74) Representative: Zimmermann & Partner Patentanwälte mbB
(86) International application number: PCT/CN2023/085338
(87) International publication number: WO 2024/197767

(57) **Abstract**

The examples of the present disclosure provide a hardware resource simulation verification method, apparatus, network device, and storage medium, which relates to the technical field of network communication. The method includes: when entering a simulation mode, synchronizing real configuration data of a network device to a simulation space, and taking the real configuration data as simulation reference configuration data; issuing simulation configuration data to the simulation space in the simulation mode, wherein the simulation space occupies memory resources of the network device; issuing the simulation reference configuration data, the simulation configuration data and data of a preset type to a detection interface of a hardware chip, and acquiring an amount of hardware resources occupied by the simulation reference configuration data, the simulation configuration data and the data of the preset type calculated by the hardware chip, wherein the data of the preset type is data that has already occupied resources of the hardware chip other than the real configuration data; determining that the simulation is successful in response to determining that a total amount of resources of the hardware chip is greater than the amount of hardware resources. It can obtain accurate hardware resource simulation results without affecting real business.

## Description

### Technical Field

The present disclosure relates to the technical field of network communication, in particular to a hardware resource simulation verification method, apparatus, network device, and storage medium.

### Background

With the large-scale deployment and use of SDN (Software Defined Network) network, automated deployment technology and multi-dimensional operation and maintenance technology have brought many conveniences to people in network deployment, change, maintenance, and other aspects. With the growth of business volume, in order to ensure that the equipment resources consumed for each deployment of business are sufficient and do not affect existing business, simulation verification technology can be used to simulate and verify each deployed business.

After the user activates a simulation verification function, the simulation system will automatically generate a simulation network based on actual deployment of the production network, and synchronize configuration data of the production network to the simulation network. Then, in response to determining that the user needs to deploy new businesses, the user can first perform business orchestration on the simulation network, initiate simulation verification, and conduct connectivity testing, overlay impact, and capacity evaluation on the entire network. After the simulation verification is passed, new orchestrated businesses will be issued to the real network.

Simulation network and real network are two separate networks, and in response to generating simulation network, it is necessary to simulate the hardware resources of each device. However, it is currently difficult to obtain hardware resource allocation algorithms for chips from chip manufacturers, making it difficult to simulate hardware resource allocations in the simulation network that are identical to those in the production network. It is also impossible to achieve real-time synchronization of massive real-time data generated in the production network to the simulation network. Therefore, the simulation results obtained using the current simulation verification functions are not accurate enough.

### Summary

The examples of the present disclosure provides a hardware resource simulation verification method, apparatus, network device, and storage medium, which can obtain accurate hardware resource simulation results without affecting real business.

In a first aspect, an example of the present disclosure provides a hardware resource simulation verification method, which is applied to a network device, the method includes:
in response to entering a simulation mode, synchronizing real configuration data of the network device to a simulation space, and taking the real configuration data as simulation reference configuration data;
issuing simulation configuration data to the simulation space in the simulation mode, wherein the simulation space occupies memory resources of the network device;
issuing the simulation reference configuration data, the simulation configuration data and data of a preset type to a detection interface of a hardware chip, and acquiring an amount of hardware resources occupied by the simulation reference configuration data, the simulation configuration data and the data of the preset type calculated by the hardware chip, wherein the data of the preset type is data that has already occupied resources of the hardware chip other than real configuration data;
determining that the simulation is successful in response to determining that a total amount of resources of the hardware chip is greater than the amount of hardware resources.

In a possible implementation, the method further includes:
feeding back a result that the simulation is successful to a control device;
issuing, in response to determining that an instruction of making simulation effective issued by the control device is received, the simulation configuration data to a real space of the network device.

In a possible implementation, the method further includes:
updating, in response to determining that the simulation configuration data is successfully issued to the real space of the network device, the simulation reference configuration data based on the simulation configuration data.

In a possible implementation, the method further includes:
deleting, in response to determining that an instruction of abandoning the simulation configuration data sent by the control device is received, the simulation configuration data in the simulation space.

In a possible implementation, the method further includes:
receiving data being immediately effective sent by the control device, wherein the data being immediately effective is simulation configuration data specified by the user which is forced to be effective or configuration data that does not support simulation functions;
issuing the data being immediately effective to the real space of the network device.

In a possible implementation, the method further includes:
exiting, in response to determining that a simulation ending instruction sent by the control device is received, or in response to determining that an operation of a user on the simulation space is not received within a specified duration, the simulation mode and deleting the simulation reference configuration data and simulation configuration data in the simulation space.

In a possible implementation, the method further includes:
issuing, every time simulation configuration data is received, the simulation configuration data to the simulation space ; or,
caching, every time simulation configuration data is received, the received simulation configuration data;
issuing, in response to determining that a simulation submission instruction sent by the control device is received, the cached simulation configuration data to the simulation space.

In a possible implementation, the method further includes:
generating, in response to determining that the total amount of resources of the hardware chip is less than the amount of hardware resources, a simulation failure log and deleting the simulation configuration data; or,
feeding back, in response to determining that the total amount of resources of the hardware chip is less than the amount of hardware resources and a simulation failure reason is a specified reason, the specified reason to the control device to enable the control device to display prompt information including the specified reason to the user; wherein the specified reason includes at least one of the following: a specified type of simulation configuration data is reissued, hardware resources of a virtual space to which the simulation space belongs are preempted by other virtual spaces, the hardware resources of the hardware chip are preempted by dynamic data generated by the network device, the hardware resources of the hardware chip are preempted by simulation configuration data that is forced to be effective, and the hardware resources of the hardware chip are preempted by configuration data that does not support simulation functions;
deleting, in response to determining that an instruction of abandoning the simulation configuration data sent by the control device is received, the simulation configuration data.

In a second aspect, an example of the present disclosure provides a hardware resource simulation verification apparatus, which is applied to a network device, the apparatus includes:
a synchronization module, to synchronize, in response to entering a simulation mode, real configuration data of the network device to a simulation space, and take the real configuration data as simulation reference configuration data;
an issuing module, to issue simulation configuration data to the simulation space in the simulation mode, wherein the simulation space occupies memory resources of the network device;
an acquisition module, to issue the simulation reference configuration data, the simulation configuration data and data of a preset type to a detection interface of a hardware chip, and acquire an amount of hardware resources occupied by the simulation reference configuration data, the simulation configuration data and the data of the preset type calculated by the hardware chip, wherein the data of the preset type is data that has already occupied resources of the hardware chip other than the real configuration data;
a determination module, to determine, in response to determining that a total amount of resources of the hardware chip is greater than the amount of hardware resources, that the simulation is successful.

In a possible implementation, the apparatus further includes:
a feedback module, to feed back a result that the simulation is successful to a control device;
wherein the issuing module is further to issue, in response to determining that an instruction of making simulation effective issued by the control device is received, the simulation configuration data to a real space of the network device.

In a possible implementation, the apparatus further includes:
an updating module, to update, in response to determining that the simulation configuration data is successfully issued to the real space of the network device, the simulation reference configuration data based on the simulation configuration data.

In a possible implementation, the apparatus further includes:
a deleting module, to delete, in response to determining that an instruction of abandoning the simulation configuration data sent by the control device is received, the simulation configuration data in the simulation space.

In a possible implementation, the apparatus further includes:
a receiving module, to receive data being immediately effective sent by the control device, wherein the data being immediately effective is simulation configuration data specified by the user which is forced to be effective or configuration data that does not support simulation functions;
wherein the issuing module is further to issue the data being immediately effective to the real space of the network device.

In a possible implementation, the apparatus further includes:
an exiting module, to exit, in response to determining that a simulation ending instruction sent by the control device is received or in response to determining that an operation of a user on the simulation space is not received within a specified duration, the simulation mode and delete the simulation reference configuration data and simulation configuration data in the simulation space.

In a possible implementation, the issuing module is specifically to:
issue, every time simulation configuration data is received, the simulation configuration data to the simulation space; or,
cache, every time simulation configuration data is received, the received simulation configuration data;
issue, in response to determining that a simulation submission instruction sent by the control device is received, the cached simulation configuration data to the simulation space.

In a possible implementation, the apparatus further includes:
a simulation failure processing module, to:
generate, in response to determining that the total amount of resources of the hardware chip is less than the amount of hardware resources, a simulation failure log and delete the simulation configuration data; or,
feed back, in response to determining that the total amount of resources of the hardware chip is less than the amount of hardware resources, and a simulation failure reason is a specified reason, the specified reason to the control device to enable the control device to display prompt information including the specified reason to the user; wherein the specified reason includes at least one of the following: a specified type of simulation configuration data is reissued, hardware resources of a virtual space to which the simulation space belongs are preempted by other virtual spaces, the hardware resources of the hardware chip are preempted by dynamic data generated by the network device, the hardware resources of the hardware chip are preempted by simulation configuration data that is forced to be effective, and the hardware resources of the hardware chip are preempted by configuration data that does not support simulation functions;
delete, in response to determining that an instruction of abandoning the simulation configuration data sent by the control device is received, the simulation configuration data.

In a third aspect, an example of the present disclosure provides a network device, which includes:
a processor;
a transceiver;
a machine readable storage medium storing machine executable instructions, which when executed by the processor, cause the processor to perform the following operations:
   in response to entering a simulation mode, synchronizing real configuration data of the network device to a simulation space, and taking the real configuration data as simulation reference configuration data;
   issuing simulation configuration data to the simulation space in the simulation mode, the simulation space occupies memory resources of the network device;
   issuing the simulation reference configuration data, the simulation configuration data and data of a preset type to a detection interface of a hardware chip, and acquiring an amount of hardware resources occupied by the simulation reference configuration data, the simulation configuration data and the data of a preset type calculated by the hardware chip, the data of a preset type is data that has already occupied the resources of the hardware chip other than real configuration data;
   determining that the simulation is successful in response to determining that a total amount of resources of the hardware chip is greater than the amount of hardware resources.

In a possible implementation, the machine executable instructions further cause the processor to execute the following operations:
feeding back a result that the simulation is successful to a control device through the transceiver;
issuing, in response to determining that an instruction of making simulation effective issued by the control device is received through the transceiver, the simulation configuration data to a real space of the network device.

In a possible implementation, the machine executable instructions further cause the processor to execute the following operations:
updating, in response to determining that the simulation configuration data is successfully issued to the real space of the network device, the simulation reference configuration data based on the simulation configuration data.

In a possible implementation, the machine executable instructions further cause the processor to execute the following operations:
deleting, in response to determining that an instruction of abandoning the simulation configuration data sent by the control device is received through the transceiver, the simulation configuration data in the simulation space.

In a possible implementation, the machine executable instructions further cause the processor to execute the following operations:
receiving data being immediately effective sent by the control device through the transceiver, wherein the data being immediately effective is simulation configuration data specified by the user which is forced to be effective or configuration data that does not support simulation functions;
issuing the data being immediately effective to the real space of the network device.

In a possible implementation, the machine executable instructions further cause the processor to execute the following operations:
exiting, in response to determining that a simulation ending instruction sent by the control device is received through the transceiver or in response to determining that an operation of a user on the simulation space is not received within a specified duration, the simulation mode and deleting the simulation reference configuration data and simulation configuration data in the simulation space.

In a possible implementation, the machine executable instructions further cause the processor to execute the following operations:
issuing, every time simulation configuration data is received through the transceiver, the simulation configuration data to the simulation space; or,
caching, every time simulation configuration data is received through the transceiver, the received simulation configuration data;
issuing, in response to determining that a simulation submission instruction sent by the control device is received through the transceiver, the cached simulation configuration data to the simulation space.

In a possible implementation, the machine executable instructions further cause the processor to execute the following operations:
generating, in response to determining that the total amount of resources of the hardware chip is less than the amount of hardware resources, a simulation failure log and deleting the simulation configuration data; or,
feeding back, in response to determining that the total amount of resources of the hardware chip is less than the amount of hardware resources and a simulation failure reason is a specified reason, the specified reason to the control device to enable the control device to display prompt information including the specified reason to the user; wherein the specified reason includes at least one of the following: a specified type of simulation configuration data is reissued, hardware resources of a virtual space to which the simulation space belongs are preempted by other virtual spaces, the hardware resources of the hardware chip are preempted by dynamic data generated by the network device, the hardware resources of the hardware chip are preempted by simulation configuration data that is forced to be effective, and the hardware resources of the hardware chip are preempted by configuration data that does not support simulation functions;
deleting, in response to determining that an instruction of abandoning the simulation configuration data sent by the control device is received through the transceiver, the simulation configuration data.

In a fourth aspect, an example of the present disclosure provides a machine readable storage medium storing machine executable instructions that, when called and executed by the processor, cause the processor to implement the method of any of the first aspect.

In a fifth aspect, an example of the present disclosure provides a computer program product, which causes the processor to implement the method of any of the first aspect.

By using the above technical solution, in the simulation mode, simulation configuration data can be issued to a simulation space. As the simulation space occupies memory resources of the network device, that is, the simulation space is located inside the network device. It can be seen that the simulation configuration data has been issued to the simulation space, but has not been issued to the real space, which will not affect the business in the real space. And the network device can use the detection capabilities of the hardware chip to acquire an amount of hardware resources occupied by the simulation reference configuration data, the simulation configuration data, and the data of the preset type computed by the hardware chip, and then determine whether the total amount of resources of the hardware chip is greater than the amount of hardware resources. It can be seen that network device can use the detection capabilities of its own hardware chip to acquire the amount of hardware resources that need to be occupied, without the need for hardware chip manufacturers to provide hardware chip resource allocation algorithms. The computed amount of hardware resources is the sum of the amount of hardware resources that need to be occupied by the actual configuration data, the simulation configuration data, and the data of the preset type, which is consistent with the actual usage of resources in the hardware chip, thereby obtaining accurate hardware resource simulation results without affecting real business.

### Brief Description of the Drawings

The drawings described herein are used to provide further understanding of the present disclosure, and form a part of the present disclosure. The schematic examples and description herein are used to explain the present disclosure and do not constitute improper limitations to the present disclosure.
FIG. 1 is an exemplary schematic diagram of a simulation network architecture in related technologies;
FIG. 2 is a simulation network architecture diagram according to an example of the present disclosure;
FIG. 3 is a flowchart of a hardware resource simulation verification method according to an example of the present disclosure;
FIG. 4 is a schematic diagram of data flow after various types of data is issued to the network device according to an example of the present disclosure;
FIG. 5 is a flowchart of another hardware resource simulation verification method according to an example of the present disclosure;
FIG. 6 is a schematic flowchart of a single device simulation according to an example of the present disclosure;
FIG. 7 is a schematic flowchart of another single device simulation according to an example of the present disclosure;
FIG. 8 is a schematic flowchart of an entire network simulation according to an example of the present disclosure;
FIG. 9 is a schematic structural diagram of a hardware resource simulation verification apparatus according to an example of the present disclosure;
FIG. 10 is a schematic structural diagram of a network device according to an example of the present disclosure.

### Detailed Description

In order to make objectives, technical solutions and advantages of the present disclosure more apparent, the present disclosure now will be described in detail with reference to the accompanying drawings and the detailed description. Obviously, the examples described are only some of the examples of the present disclosure instead of all the examples. All other examples obtained by those of ordinary skill in the art based on the examples of the disclosure are within the scope of the disclosure.

The simulation verification technology is one of typical applications of digital twin technologies, the simulation verification technology can divide the network world into production state and design state. The production state is a real physical network world, which is a collection of network devices that users actually use and operate; the design state is a virtual physical network world, which is a digital mapping of the real physical network world.

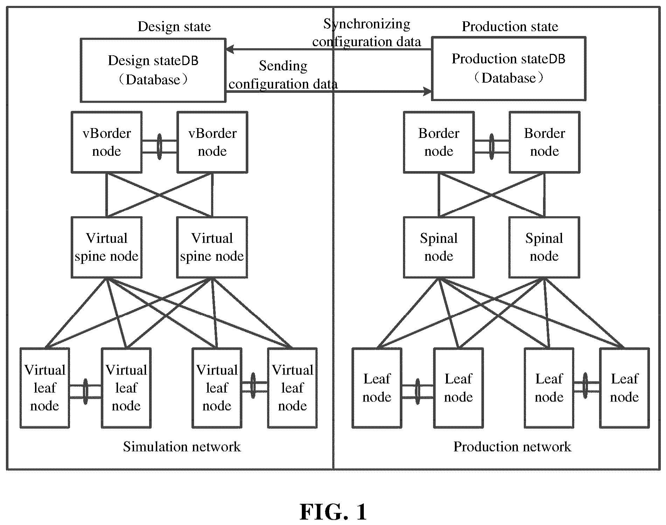

As shown in FIG. 1, the right side of FIG. 1 is the production network in the production state, which is a real physical network; the left side of FIG. 1 is the simulation network in the design state, which is a virtual network simulated based on the production network.

As an example, the topology structure of the production network includes: Border nodes, Spine nodes, and Leaf nodes, each of nodes in the production network are actually deployed network devices. The topology structure of the simulation network is the same as that of the production network, but each of nodes in the simulation network are virtual nodes. The topology structure of the simulation network includes: vBorder (virtually border) nodes, vSpine (virtually Spine) nodes, and vLeaf (virtually Leaf) nodes. Among them, the vBorder node is a virtual device simulated based on the Border node in the production network, the vSpine node is a virtual device simulated based on the Spine node in the production network, and the vLeaf node is a virtual device simulated based on the Leaf node in the production network.

The design state also includes the design state DB (Database), and the production state also includes the production state DB. The production state DB can synchronize the configuration data of the real space to the design state DB, and the design state DB can send the configuration data after successful simulation to the production state DB.

In response to constructing a simulation network, it is necessary to ensure that the virtual nodes of the simulation network and the corresponding network devices in the production network use the same hardware resource allocation method. However, hardware suppliers may not provide hardware resource allocation algorithms, and thus, during the simulation process, it cannot ensure that the hardware resource allocation of each virtual node in the simulation network is the same as that of the corresponding network devices in the production network, therefore, it may lead to inaccurate simulation results of hardware resources for network devices. For example, there may be a problem where the simulation is successful, but the deployment fails in response to deploying new business to the production network, thereby affecting deployment efficiency and the business running in the production network, and affecting the user experience.

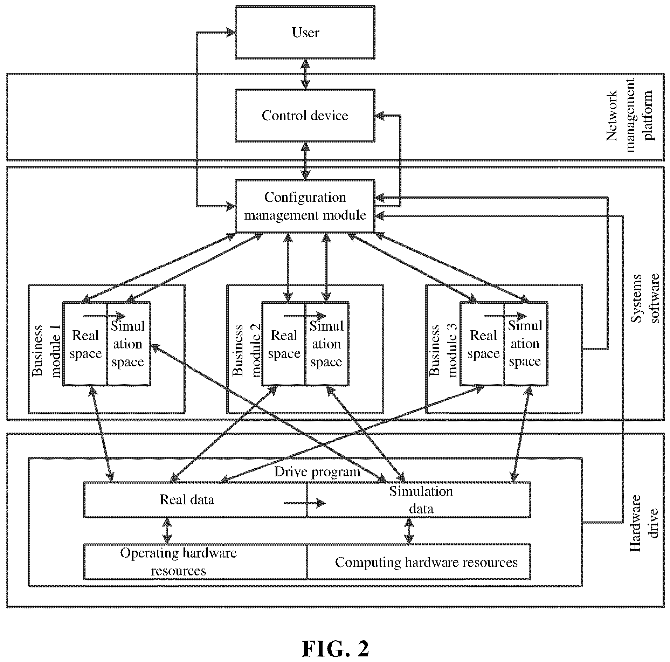

In order to solve the above problems, the examples of the present disclosure provide a hardware resource simulation verification method, in which the simulation verification of hardware resources can be completed within the network device. In order to facilitate understanding, the simulation architecture provided in the examples of the present disclosure is firstly introduced. As shown in FIG. 2, the simulation network architecture includes a network management platform, a system software, and a hardware drive, the system software, and the hardware drive are deployed in network devices.

The network management platform includes a control device, through which the user can configure and manage various network devices in the simulated network architecture. The simulation network architecture can include multiple network devices, and FIG. 2 shows one network device as an example.

The system software includes a configuration management module and multiple business modules. FIG. 2 only shows business module 1, business module 2, and business module 3 as examples. In actual implementation, the number of business modules is not limited to this.

At a data level, a network device can be divided into a real space and a simulation space.

Wherein, the real space refers to a space in which the network device actually operates, and all configuration data in the real space is immediately taken into effect. And the real space is usually in a steady state and does not easily change.

The simulation space is based on the configuration data of the real space, supporting users to arrange and deploy new businesses at any time. The simulation space can be used to fuse existing real configuration data and upcoming deployment simulation configuration data in the real space, in order to verify whether the hardware resources of the network device are sufficient.

Each business module includes a real space and a simulation space, where the real space is used to store real configuration data and the simulation space is used to store simulation configuration data. Each business block can process both real configuration data and simulation configuration data, but the processing results of the business module for real configuration data and simulation configuration data are stored separately and independently, meaning that the processing of simulation configuration data does not affect the processing of real configuration data.

The hardware drive includes drive programs for driving hardware chips. The hardware drive can process both real data in network devices and simulation data in the simulation space. For example, the hardware drive can issue real configuration data to the hardware chip, so that the real configuration data occupies the hardware resources of the hardware chip and is taken into effect in the hardware chip, that is, the hardware drive can operate the hardware resources. And the hardware drive can also invoke hardware chips for hardware resource computing.

In FIG. 2, the users can issue various management instructions to the configuration management module through the control device, and they can also directly configure management instructions in the configuration management module. The configuration management module can issue data being immediately effective to the real space of each of business modules, and can also issue simulation configuration data to the simulation space of each of business modules.

The real configuration data in the real space of each of business modules can be synchronized to its own simulation space. And each of business modules can issue the data that needs to be immediately taken into effect in the real space to the hardware drive, the hardware drive then sends the data that needs to be immediately taken into effect to the hardware chip. Each of business modules can also issue the simulation configuration data in the simulation space to the hardware drive, the hardware drive then stores the simulation configuration data in the simulation space and invokes the hardware chip to compute hardware resources based on the simulation configuration data.

In addition, both the hardware drive and the simulation module can provide notification messages to the configuration management module in response to determining changes in simulation verification results, so that the configuration management module can feed back the notification messages to the control device, the control device will push the notification message to the users, so that the users can timely perceive the simulation verification results.

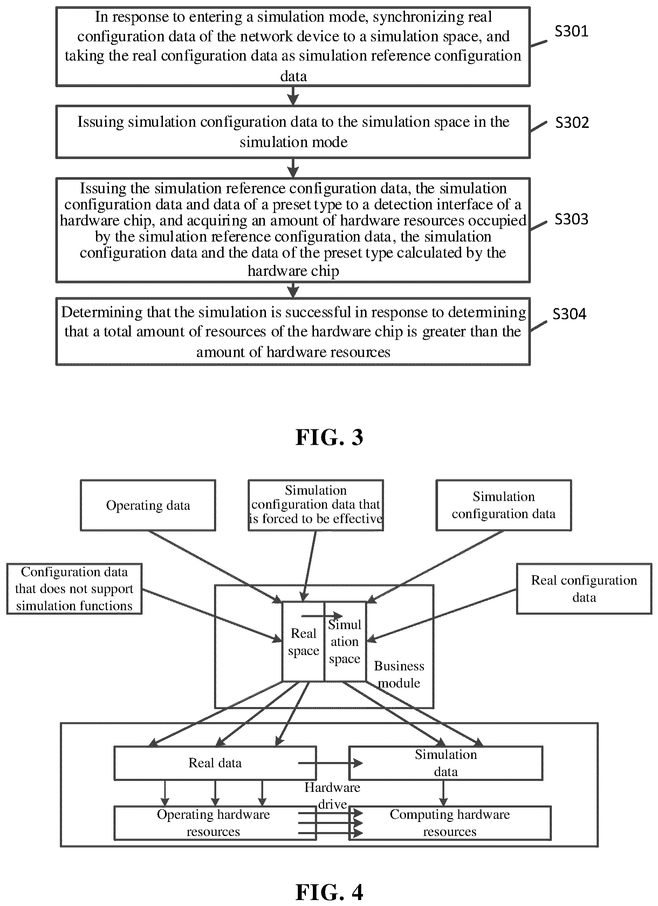

Combining the above simulation network architecture, an example of the present disclosure provides a hardware resource simulation verification method, which is applied to a network device, as shown in FIG. 3, the method includes:
S301, in response to entering a simulation mode, synchronizing real configuration data of a network device to a simulation space, and taking the real configuration data as simulation reference configuration data.

Wherein, before the network device issues simulation configuration data to the simulation space, it needs to ensure that simulation reference configuration data already exists in the simulation space. The configuration management module of the network device can set the simulation state of the network device to a simulation starting state in response to receiving an instruction of entering the simulation mode triggered by the user through the control device, and generate simulation reference configuration data based on real configuration data in the real space.

S302, issuing simulation configuration data to the simulation space in the simulation mode.

Wherein the simulation space occupies memory resources of the network device, and in the example of the present disclosure, a simulation space can be built inside the network device.

The simulation configuration data in the example of the present disclosure can be business configuration data issued for a new business in response to deploying the new business, or modified business configuration data issued for an existing business in response to determining that it is necessary to modify the existing business.

S303, issuing the simulation reference configuration data, the simulation configuration data and data of a preset type to a detection interface of a hardware chip, and acquiring an amount of hardware resources occupied by the simulation reference configuration data, the simulation configuration data and the data of the preset type calculated by the hardware chip.

The data of the preset type is data that has already occupied resources of the hardware chip other than the real configuration data.

Wherein, the hardware chip currently used in the network device have detection capabilities. After receiving simulation configuration data, the hardware drive of the network device can issue simulation configuration data, simulation reference configuration data and data of a preset type to a detection interface of the hardware chip without truly applying for hardware resources. Thereby, the hardware chip then computes amount of hardware resources occupied by the simulation reference configuration data, simulation configuration data and data of a preset type based on its own detection capabilities.

S304, determining that the simulation is successful in response to determining that a total amount of resources of the hardware chip is greater than the amount of hardware resources.

By using this method, in simulation mode, simulation configuration data can be issued to a simulation space. As the simulation space occupies memory resources of the network device, that is, the simulation space is located inside the network device. It can be seen that the simulation configuration data has been issued to the simulation space, but has not been issued to the real space, which will not affect the business in the real space. And the network device can use the detection capabilities of the hardware chip to acquire an amount of hardware resources occupied by the simulation reference configuration data, the simulation configuration data, and the data of the preset type computed by the hardware chip, and then determine whether the total amount of resources of the hardware chip is greater than the amount of hardware resources. It can be seen that network device can use the detection capabilities of its own hardware chip to acquire the amount of hardware resources that need to be occupied, without the need for hardware chip manufacturers to provide hardware chip resource allocation algorithms. The computed amount of hardware resources is the sum of the amount of hardware resources that need to be occupied by the actual configuration data, the simulation configuration data, and the data of the preset type, which is consistent with the actual usage of resources in the hardware chip, thereby obtaining accurate hardware resource simulation results without affecting real business.

In some examples of the present disclosure, after the network device determines that the simulation is successful, the result of the successful simulation can be fed back to the control device. Users can view the result of the successful simulation by the control device. In response to determining that the network device needs to be instructed to make the simulation configuration data effective, the instruction of making simulation effective can be triggered by the control device.

Furthermore, in response to determining that the network device receives the instruction of making simulation effective issued by the control device, then the simulation configuration data is issued to a real space of the network device.

Wherein, the hardware chip of the network device is located in the real space. After receiving the instruction of making simulation effective, the configuration management module of the network device can issue the simulation configuration data to the real space of the business module, and then to the real space of the hardware drive. The hardware drive can then issue the simulation configuration data to the hardware chip.

It can be understood that, in response to determining that the network device receives the instruction of making simulation effective, the simulation configuration data has already been stored in the simulation space of the network device, that is, it has already been stored in the network device. Therefore, the control device only needs to issue an instruction of making simulation effective to notify the network device to make the simulation configuration data effective, without the need to issue the simulation configuration data again, which can improve the efficiency of simulation effective and make business deployment more efficient. And on the basis of improving deployment efficiency, it can also avoid the problem of simulation configuration data failure caused by changes in hardware resource occupancy of the network device after completing simulation verification and before the simulation configuration data is taken into effect, which can improve the success rate of business deployment.

In some examples of the present disclosure, in response to determining that the network device successfully issues the simulation configuration data to the real space of the network device, the simulation reference configuration data is updated based on the simulation configuration data.

For example, the original simulation reference configuration data includes configuration data 1, configuration data 2, and configuration data 3. In response to determining that simulation configuration data 4 is successfully issued to the real space after completing simulation of the simulation configuration data 4, the updated simulation reference configuration data includes configuration data 1, configuration data 2, configuration data 3, and newly added simulation configuration data 4.

It can be understood that in response to determining that the user issues new simulation configuration data again, the network device perform hardware resource simulation verification based on the new simulation configuration data and updated simulation reference configuration data.

By using this method, in response to determining that the network devices enter the simulation mode, the existing real configuration data in real space can be used as simulation configuration reference data, which is equivalent to backing up real configuration data before simulation. After the network device successfully issues the successfully simulated configuration data to the real space, that is, after the simulation configuration data is taken into effect in the real space, the simulation reference configuration data in the simulation space is updated adaptively, so that the simulation reference configuration data in the simulation space is consistent with the real configuration data in the real space, which can improve the real-time and accuracy of subsequent simulation verification.

In some examples of the present disclosure, users may also abandon this simulation verification operation after issuing simulation configuration data. After issuing the simulation configuration data to the simulation space, in response to determining that the network device receives an instruction of abandoning the simulation configuration data from the control device, then deletes the simulation configuration data in the simulation space.

Wherein, in response to determining that the user needs to abandon the simulation verification operation, they can issue an instruction of abandoning the simulation configuration data to the network device through the control device. After receiving the instruction of abandoning the simulation configuration data, the network device can delete the simulation configuration data indicated by the instruction from the simulation space.

By using this method, the network device promptly delete abandoned simulation configuration data from the simulation space, so as to ensure the accuracy of data in the simulation space and improve the accuracy of subsequent simulation verification results.

In some examples of the present disclosure, based on the above examples, the network device can exit the simulation mode in response to determining that there is no simulation demand.

In a first implementation, in response to determining that the network device receives a simulation end instruction sent by the control device, it exits the simulation mode and deletes the simulation reference configuration data and the simulation configuration data in the simulation space.

In a second implementation, in response to determining that the network device does not receive the user's operation on the simulation space within a specified duration, it exits the simulation mode and deletes the simulation reference configuration data and the simulation configuration data in the simulation space.

Wherein, in response to determining that the network device exits the simulation mode, the simulation state can be set to a state of simulation ending and the memory resources occupied by the simulation space can be released.

In addition, in the second implementation mentioned above, in response to determining that the user's operation on the simulation space is not received within the specific duration, there may also be simulation configuration data in the simulation space that has been successfully verified but has not yet been taken into effect. With respect for this situation, the network device can process these simulation configuration data based on a pre-set default policy. For example, in response to determining that the default policy is to abandon the simulation configuration data, the network device can directly abandon the simulation configuration data and exit the simulation mode. Alternatively, in response to determining that the default policy is to submit the simulation configuration data, the network device will automatically trigger a process that makes the simulation effective. That is, the network device can update the real configuration data in the real space based on the simulation configuration data, and issue the simulation configuration data to the hardware chip. After the simulation configuration data is taken into effect in the real space, it will exit the simulation mode.

By using the above two implementations, it is possible to exit the simulation mode timely in response to determining that there is no simulation demand, in order to free up the memory resources occupied by the simulation space and avoid occupying memory resources for a long time.

In the examples of the present disclosure, the data involved in the operating system of the network device can be divided into two types, namely:
the first type is configuration data, which can be real configuration data and simulation configuration data in the above examples. The configuration data is issued manually by the user and needs to be persistence. The configuration data can only be modified and deleted by users and will not change with the operation of the network device. The configuration data belongs to static data.

The second type is operational data, which can be data generated by the network device during operation as it processes received packets or over time. The running data does not need to be persistence and will change with the external network environment, it belongs to dynamic data.

Both types of data mentioned above may occupy hardware resources of the network device, and in response to determining that the network device is in simulation mode, there may be data being immediately effective, the data being immediately effective refers to data that does not require simulation verification and needs to be immediately taken into effect in the real space. The data being immediately effective may belong to configuration data or operational data.

Users can send data being immediately effective to the network device via the control device. Correspondingly, in response to determining that the network device receives the data being immediately effective sent by the control device, then issues the data being immediately effective to a real space of the network device.

Wherein, the data state carried by the data being immediately effective is immediately effective state. After the network device receives and recognizes data being immediately effective based on the data state, it directly issues the data being immediately effective to the real space.

It should be noted that the network device may receive data being immediately effective at any stage of simulation mode, and the network device can synchronize and continue to operate on simulation configuration data in the simulation space, and can process the data being immediately effective in the real space.

The data being immediately effective issued by the user via the control device can be the simulation configuration data specified by the user which is forced to be effective or configuration data that does not support simulation functions.

Wherein, the simulation configuration data specified by the user which is forced to be effective is: simulation configuration data that the user wants which is forced to be effective due to special conditions during the simulation period. The network device can directly issue this type of simulation configuration data to the real space of the network device, and then synchronize it to the simulation space, so as to update the simulation reference configuration data of the simulation space based on this type of simulation configuration data.

The configuration data that does not support simulation functions is: configuration data issued considering the evolving needs of the network device. The network device currently does not support processing this configuration data, but this part of the configuration data will occupy hardware resources of the hardware chip.

In addition, the dynamic data generated during the operation of the network device also belongs to data being immediately effective. After generating dynamic data that needs to occupy hardware resources, the network device can directly issue the dynamic data to the hardware chip. The various types of data being immediately effective mentioned above belong to preset type of data.

In an example of the present disclosure, the network device can issue simulation configuration data to the simulation space in two manners:
manner 1, every time simulation configuration data is received, then issuing the simulation configuration data to the simulation space.

It can be understood that after issuing simulation configuration data to the simulation space, the network device can continue to execute S303-S304 above to determine whether the simulation configuration data has been successfully simulated.

That is to say, every time the configuration management module of the network device receives one piece of or a batch of simulation configuration data, it issues these simulation configuration data to the simulation space and returns the result of this hardware simulation verification to the control device in real time.
in response to determining that the simulation verification fails, the current simulation configuration data will be rolled back, that is, the current issued simulation configuration data will be deleted; in response to determining that the simulation verification is successful, the current issued simulation configuration data will be saved. After receiving the instruction of making simulation effective, the simulation configuration data will be issued to the real space.

By using this manner, hardware resource detection is dispersed during each simulation configuration data issue process, allowing users to promptly obtain the result of each hardware resource detection, thereby adjusting subsequent business arrangements timely.

Manner 2: every time simulation configuration data is received, caching the received simulation configuration data; in response to determining that the simulation submission instruction sent by the control device is received, issuing the cached simulation configuration data to the simulation space.

By using this manner, batch issuing of simulation configuration data can be carried out, which is faster and requires only one hardware resource detection for a batch of simulation configuration data, making the time for hardware resource simulation verification shorter. The probability of dynamic changes in hardware resources during the simulation verification process is relatively low, and the simulation result is more accurate.

In the example of the present disclosure, there may also be simulation failures. In response to determining that the total amount of resources of the hardware chip is less than the amount of hardware resources, then a simulation failure log is generated and the simulation configuration data is deleted.

Alternatively, in response to determining that the total amount of resources of the hardware chip is less than the amount of hardware resources, and the simulation failure reason is a specified reason, the specified reason is fed back to the control device, so that the control device can display prompt information including the specified reason to the user. In response to determining that an instruction of abandoning the simulation configuration data sent by the control device is received in the following, then the simulation configuration data is deleted.

Wherein, after displaying the specified reason to the user, the user can determine whether a portion of resources already occupied by the hardware chip can be released based on the specified reason, thereby deciding on the subsequent operation of this part of the simulation configuration data. In response to determining that the user determines that there are no available resources to release, then the control device can be triggered to send an instruction of abandoning the simulation configuration data to the network device.

Wherein, the specified reason includes at least one of the following.
1. A specified type of simulation configuration data is reissued.
   As an example, the specified type of simulation configuration data can be ACL configuration data. For example, in response to determining that a matching dimension in the currently stored ACL in the hardware chip does not include a source IP address, the specified type of simulation configuration data is to add the matching dimension of the source IP address in the ACL. In response to determining that the specified type of simulation configuration data is issued to the hardware chip, it will cause each rule in the ACL to increase the bit width occupied by the IP address dimension, causing a longer bit width of the ACL, resulting in a multiple increase in the occupied hardware resources, which may lead to simulation failure.
2. Hardware resources of a virtual space to which the simulation space belongs are preempted by other virtual spaces.

Wherein, the network device in the example of the present disclosure can include multiple virtual spaces, each of which includes a real space and a simulation space. Multiple virtual spaces share hardware resources of the hardware chip. In response to determining that the resources of this virtual space are preempted by other virtual spaces, it may lead to simulation failure.

In addition, in response to determining that the resources of this virtual space are preempted by other virtual spaces, the control device can display the reason, and users can negotiate with users operating other virtual spaces to release some hardware resources from other virtual spaces.

3. Hardware resources of the hardware chip are preempted by dynamic data generated by the network device.

The network device may generate dynamic data during the simulation process, and dynamic data may occupy the hardware resources of the hardware chip, which may lead to insufficient hardware resources of the hardware chip and result in simulation failure.

4. Hardware resources of the hardware chip are preempted by the simulation configuration data that is forced to be effective.

The network device may first issue the configuration data that is forced to be effective to the real space, and then synchronize it to the simulation space. That is, in response to determining that the network device simulates, the configuration data that is forced to be effective has already occupied the hardware resources of the hardware chip, which may lead to insufficient hardware resources of the hardware chip and result in simulation failure.

5. Hardware resources of the hardware chip are preempted by configuration data that does not support simulation functions.

The network device may directly issue configuration data that does not support simulation functions to the real space, which means that configuration data that does not support simulation functions may also occupy hardware resources of the hardware chip, which may lead to insufficient hardware resources of the hardware chip and result in simulation failure.

For the convenience of understanding, the impact of various data involved in the examples of the present disclosure on the real space and simulation space will be introduced. As shown in FIG. 4, the configuration data involved in the examples of the present disclosure includes: configuration data that does not support simulation functions, the simulation configuration data that is forced to be effective, simulation configuration data, and real configuration data.

The configuration data that does not support simulation functions, the operational data, and the simulation configuration data that is forced to be effective shown in FIG. 4 will be directly issued to the real space of the business module, the business module may further issue these data to the hardware drive, which may then issue these data to the hardware chip.

The simulation configuration data and real configuration data shown in FIG. 4 may be issued to the simulation space of the business module, wherein the simulation configuration data is issued by the control device and the real configuration data is synchronized from the real space to the simulation space by the business module.

The configuration data that does not support simulation functions, the operational data, and the simulation configuration data that is forced to be effective are all real data, which may be issued to the real space of the business module, and also be issued to the hardware drive. The hardware drive may further issue these real data to the hardware chip, causing these real data to occupy hardware resources.

Moreover, the simulation configuration data and real configuration data in the simulation space of the business module may be issued to the simulation space of the hardware drive, and both simulation configuration data and real configuration data belong to simulation data in the simulation space.

The hardware drive can take the real configuration data, operational data, simulation configuration data that is forced to be effective, and configuration data that does not support simulation functions as simulation reference configuration data, and perform hardware resource computation after receiving the simulation configuration data. The hardware resource computation refers to detecting amount of hardware resources occupied by the simulation reference configuration data, simulation configuration data and data of a preset type by invoking detection capabilities of the hardware chip. The data of the preset type includes configuration data that does not support simulation functions, operational data, and simulation configuration data that is forced to be effective in FIG. 4.

By using this method, during the simulation process, the simulation stage can also be skipped to make the data being immediately effective to be effective immediately in the real space. This can reduce the impact of the simulation process on real business and enable timely update of hardware resources, thereby improving the accuracy of subsequent simulation verification.

It should be noted that the examples of the present disclosure can support single user simulation and multi user simulation, and the single user simulation is introduced as an example in an example of the present disclosure. The single user simulation refers to the construction of a simulation space in the network device for hardware resource simulation verification.

Multi user simulation refers to the construction of multiple simulation spaces in a network device. For example, User 1 can build Simulation Space 1 in the network device and perform hardware resource simulation verification on the simulation configuration data that needs to be simulated; User 2 can build Simulation Space 2 in the network device and perform hardware resource verification on the simulation configuration data that needs to be simulated. It should be noted that the simulation reference configuration data in each simulation space always remains consistent with the real configuration data that is effective in the real space.

In the example of the present disclosure, the network device has a simulation mode and a mode of being taken into effect immediately. The simulation states in the simulation mode include the following six states: state of simulation starting, state of simulation submission, state of simulation being effective, state of simulation-being-effective back-off, state of simulation abandonment, and state of simulation ending. In response to determining that the network device exits the simulation mode, it may automatically enter the mode of being taken into effect immediately.

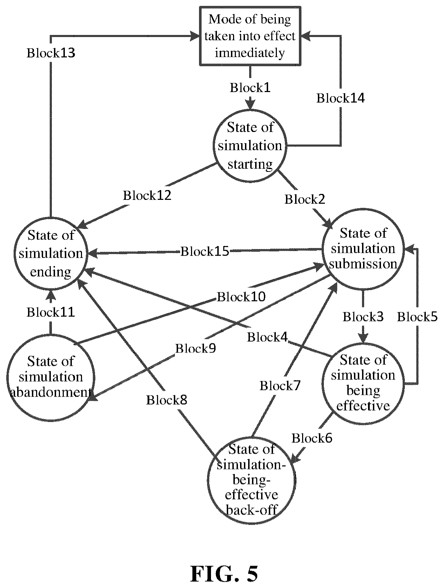

The switching between the above simulation states can be triggered by the user through the control device. As an example, as shown in FIG. 5, the switching process between each of simulation states includes the following blocks.

Block 1: the control device sends an instruction of entering the simulation mode to the configuration management module.

Users can trigger the control device to send the instruction of entering the simulation mode to the configuration management module of the network device.

After receiving the instruction of entering the simulation mode, the configuration management module sets the simulation state to the state of simulation starting and generates simulation reference configuration data based on the current real configuration data in the real space. And the configuration management module can issue real configuration data to the business module. In an example, the configuration management module can directly transmit the real configuration data to the business module, or the configuration management module can trigger the business module to actively acquire the real configuration data.

The business module can take real configuration data as simulation reference configuration data and transmit the real configuration data to the hardware drive, or trigger the hardware drive to actively acquire the real configuration data.

The hardware drive can take the real configuration data as simulation reference configuration data and store the simulation reference configuration data in the simulation space.

Block 2: the control device issues the simulation configuration data to the configuration management module, and the data state of the simulation configuration data is state of simulation submission.

Users can trigger the control device to send the simulation configuration data to the configuration management module of the network device.

After receiving the simulation configuration data, the configuration management module sets the simulation state of the network device to the state of simulation submission, and then issues the simulation configuration data to the business module.

The business module can operate the simulation configuration data and issue the simulation configuration data to the hardware drive.

Hardware drivers can compute hardware resources, after completing computing the hardware resources, the hardware drivers can feed back the result obtained by computing the hardware resources to the configuration management module, and the configuration management module can feed back the result to the control device, and then users can view the result through the control device.

The result obtained by computing the hardware resources can include the results of successful or failed simulation, and in an example, it can also include the amount of hardware resources occupied by the simulation reference configuration data, the simulation configuration data, and the data of the preset type computed by the hardware chip.

Block 3: the control device sends an instruction of making simulation effective to the configuration management module.

Wherein, after the users learn that the hardware chip has sufficient resources through the control device, they can trigger the control device to send the instruction of making simulation effective to the configuration management module.

After receiving the instruction of making simulation effective, the configuration management module sets the simulation state to the state of simulation being effective and issues the simulation configuration data to the real space.

Moreover, both the business module and the hardware drive need to operate the simulation configuration data in the real space. The hardware drive needs to convert the simulation configuration data into a format that the hardware chip can recognize and issue it to the hardware chip.

In addition, after the simulation has been successfully taken into effect, the business module and hardware drive may send a notification message indicating that the simulation has been successfully taken into effect to the configuration management module. Then, the configuration management module sends the notification message indicating that the simulation has been successfully taken into effect to the control device, and the user learns through the control device that this simulation has been successfully taken into effect.

The configuration management module may update the simulation reference configuration data, the updated simulation reference configuration data includes original simulation reference configuration data and the simulation configuration data of this simulation that is effective. Similarly, the business module and hardware drive also update the simulation reference configuration data in their own simulation space.

Block 4: the control device sends an instruction of exiting the simulation mode to the configuration management module.

The user can trigger the control device to send the instruction of exiting the simulation mode to the configuration management module.

After receiving the instruction of exiting the simulation mode, the configuration management module sets the simulation state to the state of simulation ending, and then deletes all data in the simulation space.

The configuration management module can notify the business module and hardware drive to delete all data in the simulation space. In an example, the configuration management module can notify the business module and hardware drive to delete all simulation reference configuration data and simulation configuration data, or can issue deleting instructions one by one, each of the deleting instructions is used to indicate the deletion of one simulation reference configuration data or simulation configuration data.

Block 5: the control device continues to send simulation configuration data to the configuration management module.

Block 5 can be executed after block 3, that is, after the user learns the simulation has been taken into effect successfully, the user can continue to trigger the control device to send new simulation configuration data to the configuration management module, that is, the network device continues to perform simulation verification operations on the new simulation configuration data. The process of simulation verification on the new simulation configuration data is the same as block 2, and will not be repeated here.

Block 6: in response to determining that the simulation fails to be taken into effect, the network device performs a simulation-being-effective back-off.

Block 6 can be executed in response to determining that the simulation state is in the state of simulation being effective; in response to determining that the simulation of the network device fails to be taken into effect, it can actively perform the simulation-being-effective back-off.

After receiving a notification indicating that the simulation fails to be taken into effect, the configuration management module sets the simulation state to the state of simulation-being-effective back-off.

The business module can restore the real configuration data in the real space to a state before the simulation is taken into effect, and roll back the simulation configuration data in the simulation space to a state before issuing these simulation configuration data.

The hardware drive also needs to restore the real configuration data in the real space to the state before this simulation is taken into effect, and roll back the simulation configuration data in the simulation space to the state before issuing these simulation configuration data.

Block 7: the control device sends the simulation configuration data to the configuration management module.

After the simulation back-off in block 6 is completed, the user can continue to trigger the control device to send new simulation configuration data to the configuration management module. The process of performing simulation verification on the new simulation configuration data is the same as that in block 2, and will not be repeated here.

Block 8: the control device sends an instruction of exiting the simulation to the configuration management module.

After completing the simulation back-off in block 6, the user can trigger the control device to send the instruction of exiting the simulation mode to the configuration management module.

The processing manner of the configuration management module after receiving the instruction of exiting the simulation can refer to block 4, and will not be repeated here.

Block 9: the control device sends an instruction of abandoning the simulation to the configuration management module.

In the case where the simulation state is the state of simulation submission, the control device can send the instruction of abandoning the simulation to the configuration management module.

After receiving the instruction of abandoning the simulation, the configuration management module sets the simulation state to the state of simulation abandonment.

The business module and hardware drive can roll back the simulation configuration data in the simulation space to a state before issuing this batch of simulation configuration data.

Block 10: the control device sends the simulation configuration data to the configuration management module.

After the network device performs the block 9, the user can continue to trigger the control device to send the simulation configuration data to the configuration management module. The process of performing simulation verification on the new simulation configuration data is the same as that in block 2, and will not be repeated here.

Block 11: the control device sends an instruction of exiting the simulation mode to the configuration management module.

After the network device performs the block 9, the user can trigger the control device to send the instruction of exiting the simulation mode to the configuration management module. The processing manner of the instruction of exiting the simulation mode is the same as that in block 4, and will not be repeated here.

Block 12: the control device sends an instruction of exiting the simulation mode to the configuration management module.

In the case where the simulation state of the network device is the state of simulation starting, the user can also trigger the control device to send the instruction of exiting the simulation mode to the configuration management module. The processing manner of the instruction of exiting the simulation mode can refer to block 4, and will not be repeated here.

Block 13: the network device enters the mode of being taken into effect immediately.

After the network device exits the simulation mode, it may clear all simulation states and automatically enter the mode of being taken into effect immediately.

In addition, the business module and hardware driver can issue the data being immediately effective received in the future to the real space.

Block 14: the network device fails to enter the simulation mode.

After block 2, the network device may fail to enter the simulation mode due to insufficient memory resources or other reasons. At this time, the configuration management module can delete the real configuration data that has been synchronized to the simulation space. Correspondingly, the business module deletes the simulation reference configuration data in the simulation space. And the hardware drive deletes the simulation reference configuration data in the simulation space.

Block 15: the control device sends an instruction of exiting the simulation mode to the configuration management module.

Wherein, the users can actively trigger the control device to send an instruction of exiting the simulation mode to the configuration management module during simulation verification, or the configuration management module can also exit the simulation mode in response to determining that an operation of a user on the simulation space is not received within a specified duration.

The manner of exiting the simulation mode can refer to block 4 described above, which will not be repeated here.

The following is an example to illustrate data changes in various simulation states. Before the network device enters the state of simulation starting, the configuration data in the real space of the network device includes: real configuration data A, real configuration data B, and real configuration data C.

The state of simulation starting is triggered by the user. In response to determining that the network device is in the state of simulation starting, the network device backs up real configuration data A, real configuration data B, and real configuration data C to generate simulation reference configuration data A1, simulation reference configuration data B1, and simulation reference configuration data C1. The simulation reference configuration data A1, the simulation reference configuration data B1, and the simulation reference configuration data C1 are stored in its own simulation space. In response to determining that the network device is in the state of simulation starting, the network device is in a blocked state and users are not allowed to perform other operations.

Users can send simulation configuration data D1, simulation configuration data E1, and simulation configuration data F1 to the network device through the control device. At this time, the simulation state of the network device changes to the state of simulation submission, and the network device can store the simulation configuration data D1, the simulation configuration data E1, and the simulation configuration data F1 in its own simulation space.

In addition, the user can trigger the control device to send an instruction of deleting the simulation reference configuration data C1 to the network device, and then the network device can delete the reference configuration data C1 in the simulation space. Furthermore, the network device can perform hardware resource simulation verification on the received simulation configuration data.

in response to determining that the hardware resource simulation verification is successful, the users can trigger the control device to send an instruction of making simulation effective to the network device, which will then make the network device in the state of simulation being effective. The network device issues the simulation configuration data D1, the simulation configuration data E1, and the simulation configuration data F1 to the real space as real configuration data D, real configuration data E, and real configuration data F in the real space, and delete real configuration data C in the real space. In response to determining that the network device is in the state of simulation being effective, the network device is in a blocked state and users are not allowed to perform other operations.

In response to determining that the simulation fails to be taken into effect, the network device can actively enter the state of simulation-being-effective back-off, and the network device restores the real configuration data in the real space to a state before the simulation is taken into effect. In response to determining that the network device is in the state of simulation-being-effective back-off, the network device is in a blocked state and users are not allowed to perform other operations.

In response to determining that the user actively abandons this simulation operation but does not exit the simulation mode, the network device switches back to the state of simulation starting. The network device deletes simulation reference configuration data A1, simulation reference configuration data B1, simulation configuration data D1, simulation configuration data E1, and simulation configuration data F1 in its own simulation space, and generates the simulation reference configuration data A1, the simulation reference configuration data B1 and the simulation reference configuration data C1 again in the simulation space. At this point, the network device is in a blocked state and users are not allowed to perform other operations.

In addition, in response to determining that the network device receives data being immediately effective, it will issue the data being immediately effective to the real space.

For example, in response to determining that the network device receives the data being immediately effective X, which is the simulation configuration data that needs to be taken into effect immediately, the network device can issue X to the real space and issue X to the simulation space to obtain X1.

In response to determining that the network device generates dynamic data Y and receives configuration data Z that does not support simulation functions sent by the control device, then Y and Z are issued to the real space, and Y and Z are issued to the simulation space of the hardware drive to obtain Y1 and Z1.

The state of simulation ending can be actively triggered by the users, or the network device can actively exit the simulation mode in response to determining that an operation of a user on the simulation space is not received within a specified duration. In response to determining that the network device is in the state of simulation ending, it deletes all data in the simulation space, namely deleting simulation reference configuration data A1, simulation reference configuration data B1, simulation reference configuration data C1, simulation configuration data D1, simulation configuration data E1, simulation configuration data F1, and X1, Y1, and Z1. In response to determining that the network device is in the state of simulation ending, the network device is in a blocked state and users are not allowed to perform other operations.

In the above example, the configuration data in the real space includes A, B, and C, the subsequent issued simulation configuration data includes D, E, F, and the deleted C. And the data being immediately effective issued during the simulation period includes X, Y, and Z, where X is the simulation data that is forced to be effective.

In the simulation phase,
the simulation space of the business module includes: A1, B1, D1, E1, F1, X1;
the real space of the business module includes: A, B, C, X, Y, Z;
the simulation space of the hardware drive includes: A1, B1, D1, E1, F1, X1, Y1, Z1;
the real space of the hardware drive includes: A, B, C, X, Y, Z.

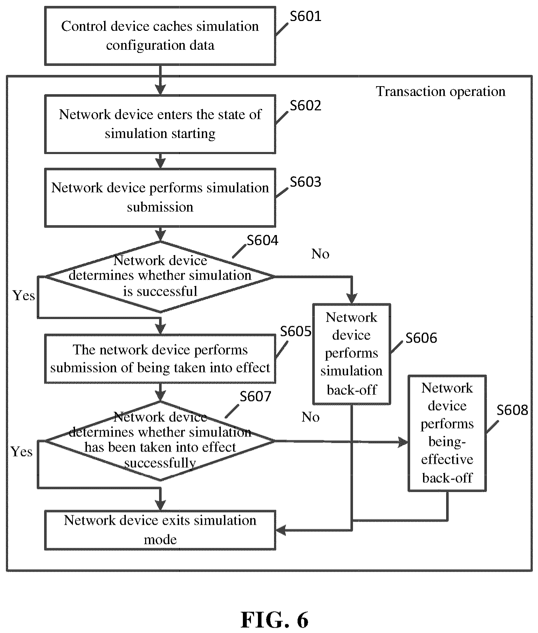

In addition, for different application scenarios, the examples of the present disclosure provide different simulation processes. As shown in FIG. 6, which is a flowchart of a single device simulation provided in an example of the present disclosure, which can include the following blocks:
S601, the control device caches simulation configuration data.

Wherein, the control device can cache the simulation configuration data newly arranged by the users.

S602, the network device enters the state of simulation starting.

After the network device enters the state of simulation starting, it synchronizes the real configuration data from the real space to the simulation space as simulation reference configuration data.

S603, the network device performs simulation submission.

The users can trigger the control device to send the simulation configuration data to the network device. After receiving the simulation configuration data, the network device enters the state of simulation submission, and then sends the simulation configuration data to the simulation space of the network device.

S604, the network device determines whether the simulation is successful.

The network device acquires the amount of hardware resources occupied by the simulation reference configuration data and the simulation configuration data computed by the hardware chip. In response to determining that the amount of hardware resources is less than the total amount of resources of the hardware chip, it is determined that the simulation is successful and S605 is executed; otherwise, S606 is executed.

S605, the network device performs submission of being taken into effect. After S605, execute S607.

The control device sends an instruction of making simulation effective to the network device, and then the network device issues the simulation configuration data to the real space.

S606, the network device performs simulation back-off.

In response to determining that the network device determines that the simulation is not successful in S604, it will delete the simulation configuration data in the simulation space and exit the simulation mode.

S607, the network device determines whether the simulation has been taken into effect successfully
In response to determining that the simulation is not taken into effect successfully, execute S608; in response to determining that the simulation is taken into effect successfully, the network device exits the simulation mode.

S608, the network device performs being-effective back-off.

In response to determining that the network device determines that the simulation is not taken into effect successfully, then the network device enters the state of simulation-being-effective back-off, and restores the real configuration data in the real space to a state before this simulation is taken into effect, and exist the simulation mode.

In the above process, the example of the present disclosure packages S602-S608 in the box as a transaction operation, and the result of the transaction operation is successful or failed simulation, without any intermediate state. In addition, the users are not aware of the entire simulation process, and the network device only notifies the user whether the simulation was successful through the control device. In response to determining that the current simulation fails, the network device may also notify the reason of the current simulation failure. Then, in response to determining that the users trigger the control device to issue a next batch of simulation configuration data, the network device executes the above process again.

By using this method, the simulation mode can be exited timely after completing the simulation, avoiding the simulation space occupying memory resources for a long time.

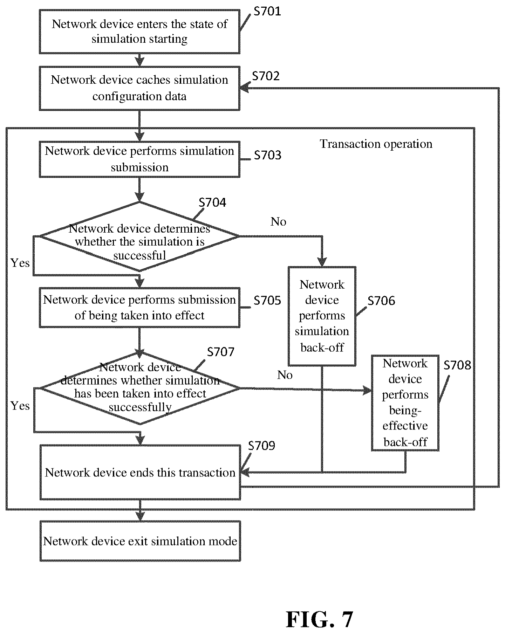

However, in the case of a large data amount of real configuration data in the real space, in response to determining that simulation is performed through the above simulation process, due to the long time it takes for the network device to generate simulation reference configuration data and send the same to the simulation space, users will clearly feel stuck. Therefore, to address this issue, as shown in FIG. 7, which is a flowchart of a single device simulation provided in an example of the present disclosure, which can include the following blocks: S701-S709.

S701, the network device enters the state of simulation starting.

S702, the control device caches simulation configuration data.

S703, the network device performs simulation submission.

S704, the network device determines whether the simulation is successful.

Wherein, in response to determining that the network device determines that the simulation is successful, execute S705; otherwise, execute S706.

S705, the network device performs submission of being taken into effect.

S706, the network device performs simulation back-off.

S707, the network device determines whether the simulation has been taken into effect successfully

Wherein, in response to determining that the network device determines that the simulation has been taken into effect successfully, execute S709; otherwise, execute S708.

S708, the network device performs being-effective back-off.

Wherein, the implementations of S701-S708 mentioned above can refer to S601-S608 in FIG. 6, and will not be repeated here.

S709, the network device ends this transaction.

The examples of the present disclosure package the S703-S709 in the box as transaction operations. Regardless of whether the result of this transaction is successful or not, the network device can choose to exit the simulation mode or return to executing S702, that is, proceed to a next simulation process. Therefore, through this simulation process, the network device can perform multiple simulation operations between performing the state of simulation starting and exit the simulation mode.

In addition, compared to the example shown in FIG. 6, the simulation process provided in the present disclosure takes out the process of the network device entering the state of simulation starting from the transaction operation as a first block of the entire simulation process, that is, the network device does not need to generate simulation reference configuration data in the simulation process of the transaction operation and send the simulation reference configuration data to the simulation space, so the users will not feel clearly stuck.

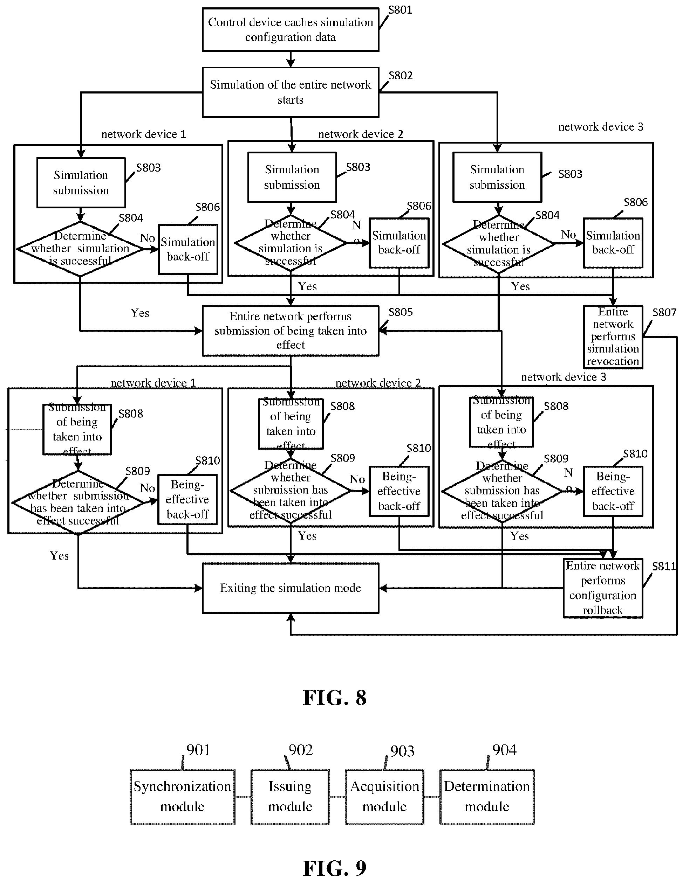

As shown in FIG. 8, which is a schematic diagram of the entire network simulation process provided in the example of the present disclosure. The entire network can be divided into a design state network and a production state network. FIG. 8 shows the production state network, and the process can include the following blocks: S801-S808.

S801, the control device caches simulation configuration data.

Wherein, the users can cache the simulation configuration data into the control device.

S802, the simulation of the entire network starts.

Wherein, after the user triggers the entire network to enter the simulation mode, all network devices in the entire network enter the simulation mode.

S703, the network device performs simulation submission.

FIG. 8 exemplary illustrates network device 1, network device 2, and network device 3. In actual implementation, the number of network devices in the entire network is not limited to this. The network device 1, the network device 2, and the network device 3 are all submitted for simulation.

The control device can perform simulation configuration for various network devices within the design state network, that is, the simulation configuration data is issued to the design state network, and then the simulation configuration data is synchronized to the production state network in real-time. However, the simulation configuration data can be synchronized to the simulation space of various network devices in the production state network, and the simulation configuration data is temporarily not effective in the production state network.

S804, the network device determines whether the simulation is successful.

Wherein, each network device determines whether the simulation is successful. The network devices in the design state network simulate the connectivity testing and overlay impact of the design state network. The network devices in the production state network are used to verify whether the hardware resources of the network devices are sufficient, that is, the simulation verification of the hardware resources is performed according to the method provided in the above example.

In response to determining that the simulation of each network device is successful, execute S805; otherwise, execute S806.

S805, the entire network performs submission of being taken into effect.

Wherein, in response to determining that the user learns that each network device in the entire network has successfully simulated, the user triggers an instruction of the entire network performing submission of being taken into effect through the control device. After S805, execute S808.

S806, the network device performs simulation back-off.

Wherein, in response to determining that there is a network device whose simulation fails, then this network device whose simulation fails performs simulation back-off. The method of simulation back-off can refer to the processing method of network devices after simulation failure introduced in the above examples.

S807, the entire network performs simulation revocation.

In response to determining that the user triggers an instruction for revoking simulation for the entire network, then all network devices in the entire network delete the simulation configuration data and the simulation reference configuration data in their own simulation space, and exit the simulation mode.

S808, the network device performs submission of being taken into effect.

Each network device in the entire network performs submission of being taken into effect, which means that each network device issues simulation configuration data to its own real space.

S809, the network device determines whether the submission of being taken into effect is successful.

Wherein, both the network devices in the design state and the production state determines whether the simulation has been taken into effect successfully. In response to determining that the simulation for each network device has been taken into effect successfully, it indicates that the current simulation is successful and all network devices in the entire network exit the simulation mode. Otherwise, execute S810.

S810, the network device performs simulation back-off.

In response to determining that there is a network device in the entire network fails to be taken into effect the simulation, then the network device restores the real configuration data in the real space to a state before the current simulation is taken into effect, and restores the simulation configuration data in the simulation space to a state before this batch of simulation configuration data is issued.

S811, the entire network performs configuration rollback.

In response to determining that the user triggers an instruction for the entire network performing configuration rollback through the control device, all network devices in the entire network restore the real configuration data in the real space to a state before this simulation is taken into effect, delete all data in the simulation space, and then all network devices in the entire network exit the simulation mode.

Through the above process, it can be seen that only in response to determining that all network devices in the entire network are successfully simulated, submission of being taken into effect is performed; only in response to determining that simulations of all network devices in the entire network have been taken into effect successfully, the current simulation is successful, thus improving the accuracy of simulation verification.

In addition, during the simulation process, in response to determining that simulations of some network devices in the entire network fail, the simulation failure result can be notified to the user, and then the user can decide whether to perform configuration back-off for the entire network or accept simulation failure of some network devices and continue with submission of being taken into effect.

It should be noted that in network devices, there are still some data that are not suitable for simulation verification, and simulation verification cannot be performed on these data, which are introduced separately in the following:
(1) A few key business data with fixed amount of resources

For example, according to the protocol number, packet matching and sending ACL and redirect resources occupy a fixed amount of resources, and occupy a smaller amount of resources, and different business modules can share this type of data. After the network device is started, hardware chip resources can be pre-occupied and pre-deducted directly from the total resources of the hardware chip, without participating in subsequent resource comparison.

### (2) Frequently changing resources

For example, memory resources change frequently, and the simulation space itself occupies a large amount of memory. In response to determining that the occupied memory resources are verified, it is easy to encounter the problem of successful simulation verification result, but with a high probability of failure in actual implementation, thereby leading to the failure of the simulation verification function.

For this type of resource, a macro evaluation can be conducted from an empirical perspective and is not suitable for simulation verification.

### (3) Business data generated by packet triggering

For example, during virtual machine migration, the network device automatically generates filtering ACL after receiving packets from the user end, which are used to release subsequent packets from the user.

In response to determining that this type of filtering ACL is simulated and verified instead of directly being taken into effect, it may result in the migrated virtual machine being unable to go online, unable to access the network normally, resulting in a poor user experience.

So this type of resource is directly issued to the real space for being taken into effect immediately without performing simulation verification.

(4) In a scenario where multiple devices are simulated simultaneously, the business configuration requires multiple devices to work together to determine the occupied amount of resources.

For example, for the next hop of PBR (Policy Based Route), in response to determining that the route is reachable, then the corresponding device resources are occupied; in response to determining that the route is unreachable, there is no need to occupy device resources.

However, in response to determining that the next hop of PBR is one simulation configuration of a peer device , then routing is not reachable for network devices configured with PBR. In response to determining that PBR is not included in the resource computation during the simulation process, it may cause PBR to fail to occupy resources in response to determining that both two network devices are taken into effect, resulting in the inability to route based on PBR and business failure. In response to determining that the next hop route of the simulated PBR is published by the peer device, it may affect the business traffic of the entire network.

Therefore, this type of business configuration defaults to occupying device resources during simulation, that is, it defaults the success of the simulation. Generally, this type of business configuration occupies less resources and accepts inaccurate simulation data caused by the occupation of device resources by this type of business configuration.

Based on the same invention concept, the present example also provides a hardware resource simulation verification apparatus applied to the network device, as shown in FIG. 9. The apparatus includes:
a synchronization module 901, to synchronize, in response to entering a simulation mode, real configuration data of a network device to a simulation space, and take the real configuration data as simulation reference configuration data;
an issuing module 902, to issue simulation configuration data to the simulation space in the simulation mode, wherein the simulation space occupies memory resources of the network device;
an acquisition module 903, to issue the simulation reference configuration data, the simulation configuration data and data of a preset type to a detection interface of a hardware chip, and acquire an amount of hardware resources occupied by the simulation reference configuration data, the simulation configuration data and the data of the preset type calculated by the hardware chip, wherein the data of the
preset type is data that has already occupied resources of the hardware chip other than the real configuration data;
a determination module 904, to determine, in response to determining that a total amount of resources of the hardware chip is greater than the amount of hardware resources, that the simulation is successful.

In an example, the apparatus further includes:
a feedback module, to feed back a result that the simulation is successful to a control device;
wherein the issuing module 902 is further to issue, in response to determining that an instruction of making simulation effective issued by the control device is received, the simulation configuration data to a real space of the network device.

In an example, the apparatus further includes:
an updating module, to update, in response to determining that the simulation configuration data is successfully issued to the real space of the network device, the simulation reference configuration data based on the simulation configuration data.

In an example, the apparatus further includes:
a deleting module, to delete, in response to determining that an instruction of abandoning the simulation configuration data sent by the control device is received, the simulation configuration data in the simulation space.

In an example, the apparatus further includes:
a receiving module, to receive data being immediately effective sent by the control device, wherein the data being immediately effective is simulation configuration data specified by the user which is forced to be effective or configuration data that does not support simulation functions;
wherein the issuing module 902 is further to issue the data being immediately effective to the real space of the network device.

In an example, the apparatus further includes:
an exiting module, to exit, in response to determining that a simulation ending instruction sent by the control device is received or in response to determining that an operation of a user on the simulation space is not received within a specified duration, the simulation mode and delete the simulation reference configuration data and simulation configuration data in the simulation space.

In an example, the issuing module 902 is specifically to:
issue, every time simulation configuration data is received, the simulation configuration data to the simulation space; or,
cache, every time simulation configuration data is received, the received simulation configuration data;
issue, in response to determining that a simulation submission instruction sent by the control device is received, the cached simulation configuration data to the simulation space.

In an example, the apparatus further includes:
a simulation failure processing module, to:
generate, in response to determining that total amount of resources of the hardware chip is less than the amount of hardware resources, a simulation failure log and delete the simulation configuration data; or,
feed back, in response to determining that the total amount of resources of the hardware chip is less than the amount of hardware resources, and a simulation failure reason is a specified reason, the specified reason to the control device to enable the control device to display prompt information including the specified reason to the user; wherein the specified reason includes at least one of the following: a specified type of simulation configuration data is reissued, hardware resources of a virtual space to which the simulation space belongs are preempted by other virtual spaces, the hardware resources of the hardware chip are preempted by dynamic data generated by the network device, the hardware resources of the hardware chip are preempted by simulation configuration data that is forced to be effective, and the hardware resources of the hardware chip are preempted by configuration data that does not support simulation functions;
delete, in response to determining that an instruction of abandoning the simulation configuration data sent by the control device is received, the simulation configuration data.

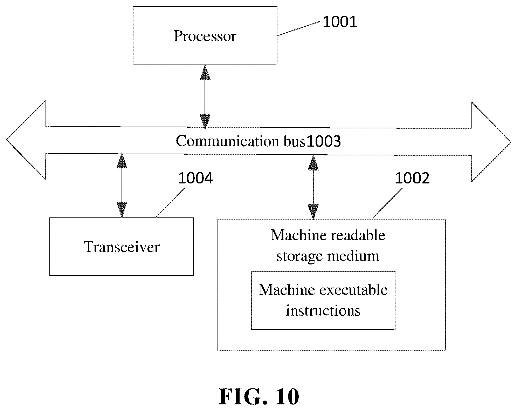

An example of the present disclosure also provides a network device, as shown in FIG. 10, the network device includes:
a processor 1001;
a transceiver 1004;
a machine readable storage medium 1002 storing machine executable instructions, which when executed by the processor 1001, cause the processor to perform the following operations:
   in response to entering a simulation mode, synchronizing real configuration data of the network device to a simulation space, and taking the real configuration data as simulation reference configuration data;
   issuing simulation configuration data to the simulation space in the simulation mode, wherein the simulation space occupies memory resources of the network device;
   issuing the simulation reference configuration data, the simulation configuration data and data of a preset type to a detection interface of a hardware chip, and acquiring an amount of hardware resources occupied by the simulation reference configuration data, the simulation configuration data and the data of the preset type calculated by the hardware chip, wherein the data of the preset type is data that has already occupied resources of the hardware chip other than the real configuration data;
   determining that the simulation is successful in response to determining that a total amount of resources of the hardware chip is greater than the amount of hardware resources.

In an example, wherein the machine executable instructions when being executed by the processor 1001, further cause the processor to perform the following operations:
feeding back a result that the simulation is successful to a control device through the transceiver 1004;
issuing, in response to determining that an instruction of making simulation effective issued by the control device is received through the transceiver 1004, the simulation configuration data to a real space of the network device.

In an example, wherein the machine executable instructions when being executed by the processor 1001, further cause the processor to perform the following operations:
updating, in response to determining that the simulation configuration data is successfully issued to the real space of the network device, the simulation reference configuration data based on the simulation configuration data.

In an example, wherein the machine executable instructions when being executed by the processor 1001, further cause the processor to perform the following operations:
deleting, in response to determining that an instruction of abandoning the simulation configuration data sent by the control device is received through the transceiver 1004, the simulation configuration data in the simulation space.

In an example, wherein the machine executable instructions when being executed by the processor 1001, further cause the processor to perform the following operations:
receiving data being immediately effective sent by the control device through the transceiver 1004, wherein the data being immediately effective is simulation configuration data specified by the user which is forced to be effective or configuration data that does not support simulation functions;
issuing the data being immediately effective to the real space of the network device.

In an example, wherein the machine executable instructions when being executed by the processor 1001, further cause the processor to perform the following operations:
exiting, in response to determining that a simulation ending instruction sent by the control device is received through the transceiver 1004 or in response to determining that an operation of a user on the simulation space is not received within a specified duration, the simulation mode and deleting the simulation reference configuration data and simulation configuration data in the simulation space.

In an example, wherein the machine executable instructions when being executed by the processor 1001, further cause the processor to perform the following operations:
issuing, every time simulation configuration data is received through the transceiver 1004, the simulation configuration data to the simulation space; or,
caching, every time simulation configuration data is received through the transceiver 1004, the received simulation configuration data;
issuing, in response to determining that a simulation submission instruction sent by the control device is received through the transceiver 1004, the cached simulation configuration data to the simulation space.

In an example, wherein the machine executable instructions when being executed by the processor 1001, further cause the processor to perform the following operations:
generating, in response to determining that total amount of resources of the hardware chip is less than the amount of hardware resources, a simulation failure log and deleting the simulation configuration data; or,
feeding back, in response to determining that the total amount of resources of the hardware chip is less than the amount of hardware resources and a simulation failure reason is a specified reason, the specified reason to the control device to enable the control device to display prompt information including the specified reason to the user; wherein the specified reason includes at least one of the following: a specified type of simulation configuration data is reissued, hardware resources of a virtual space to which the simulation space belongs are preempted by other virtual spaces, the hardware resources of the hardware chip are preempted by dynamic data generated by the network device, the hardware resources of the hardware chip are preempted by simulation configuration data that is forced to be effective, and the hardware resources of the hardware chip are preempted by configuration data that does not support simulation functions;
deleting, in response to determining that an instruction of abandoning the simulation configuration data sent by the control device is received through the transceiver 1004, the simulation configuration data.

As shown in FIG. 10, the network device may also include a communication bus 1003. The communication between the processor 1001, the machine readable storage medium 1002, and the transceiver 1004 is completed through the communication bus 1003, which can be a Peripheral Component Interconnect (PCI) bus or an Extended Industry Standard Architecture (EISA) bus, etc. The communication bus 1003 can include an address bus, a data bus, a control bus, or the like.

The transceiver 1004 can be a wireless communication module, and under the control of the processor 1001, the transceiver 1004 interacts with other devices for data.

The machine readable storage medium 1002 can include a random access memory (RAM), or can include a non-volatile memory (NVM), for example at least one disk memory. In an example, the machine readable storage medium 1002 can also be at least one storage device located away from the processor described above.

The aforementioned processor 1001 can be a general-purpose processor, such as a central processing unit (CPU), a network processor (NP), or the like; it can also be a digital signal processor (DSP), an disclosure specific integrated circuit (ASIC), a field-programmable gate array (FPGA) or other programmable logic device, a discrete gate or transistor logic device, a discrete hardware component.

Based on the same invention concept, according to the hardware resource simulation verification method provided in the above examples of the present disclosure, an example of the present disclosure also provides a machine readable storage medium storing machine executable instructions that, when by the processor, cause the processor to implement any of the above hardware resource simulation verification methods.

In another example provided in the present disclosure, a computer program product containing instructions is also provided, which, when running on a computer, causes the computer to implement any of the above hardware resource simulation verification methods in the above examples.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

The description is only for preferred examples of the present disclosure, and examples are not so limited. Any modifications, substitutions, improvements, etc., which are made within the spirit and principles of the present disclosure, will fall into the protection scope of the present disclosure.

## Claims

1. A hardware resource simulation verification method, applied to a network device, comprising:
in response to entering a simulation mode, synchronizing real configuration data of the network device to a simulation space, and taking the real configuration data as simulation reference configuration data;
issuing simulation configuration data to the simulation space in the simulation mode, wherein the simulation space occupies memory resources of the network device;
issuing the simulation reference configuration data, the simulation configuration data and data of a preset type to a detection interface of a hardware chip, and acquiring an amount of hardware resources occupied by the simulation reference configuration data, the simulation configuration data and the data of the preset type calculated by the hardware chip, wherein the data of the preset type is data that has already occupied resources of the hardware chip other than the real configuration data;
determining that the simulation is successful in response to determining that a total amount of resources of the hardware chip is greater than the amount of hardware resources.

2. The method of claim 1, wherein after determining that the simulation is successful, the method further comprises:
feeding back a result that the simulation is successful to a control device;
issuing, in response to determining that an instruction of making simulation effective issued by the control device is received, the simulation configuration data to a real space of the network device.

3. The method of claim 2, wherein after issuing the simulation configuration data to a real space of the network device, the method further comprises:
updating, in response to determining that the simulation configuration data is successfully issued to the real space of the network device, the simulation reference configuration data based on the simulation configuration data.

4. The method of claim 1, wherein after issuing simulation configuration data to the simulation space, the method further comprises:
deleting, in response to determining that an instruction of abandoning the simulation configuration data sent by the control device is received, the simulation configuration data in the simulation space.

5. The method of any one of claims 1-4, further comprising:
receiving data being immediately effective sent by the control device, wherein the data being immediately effective is simulation configuration data specified by the user which is forced to be effective or configuration data that does not support simulation functions;
issuing the data being immediately effective to the real space of the network device.

6. The method of any one of claims 1-4, further comprising:
exiting, in response to determining that a simulation ending instruction sent by the control device is received, or in response to determining that an operation of a user on the simulation space is not received within a specified duration, the simulation mode and deleting the simulation reference configuration data and simulation configuration data in the simulation space.

7. The method of claim 1, wherein issuing simulation configuration data to the simulation space comprises:
issuing, every time simulation configuration data is received, the simulation configuration data to the simulation space ; or,
caching, every time simulation configuration data is received, the received simulation configuration data;
issuing, in response to determining that a simulation submission instruction sent by the control device is received, the cached simulation configuration data to the simulation space.

8. The method of claim 1, wherein after acquiring the amount of hardware resources occupied by the simulation reference configuration data, the simulation configuration data and the data of the preset type calculated by the hardware chip, the method further comprises:
generating, in response to determining that the total amount of resources of the hardware chip is less than the amount of hardware resources, a simulation failure log and deleting the simulation configuration data; or,
feeding back, in response to determining that the total amount of resources of the hardware chip is less than the amount of hardware resources and a simulation failure reason is a specified reason, the specified reason to the control device to enable the control device to display prompt information including the specified reason to the user;
wherein the specified reason includes at least one of the following: a specified type of simulation configuration data is reissued, hardware resources of a virtual space to which the simulation space belongs are preempted by other virtual spaces, the hardware resources of the hardware chip are preempted by dynamic data generated by the network device, the hardware resources of the hardware chip are preempted by simulation configuration data that is forced to be effective, and the hardware resources of the hardware chip are preempted by configuration data that does not support simulation functions;
deleting, in response to determining that an instruction of abandoning the simulation configuration data sent by the control device is received, the simulation configuration data.

9. A hardware resource simulation verification apparatus, applied to a network device, the apparatus comprising:
a synchronization module, to synchronize, in response to entering a simulation mode, real configuration data of the network device to a simulation space, and take the real configuration data as simulation reference configuration data;
an issuing module, to issue simulation configuration data to the simulation space in the simulation mode, wherein the simulation space occupies memory resources of the network device;
an acquisition module, to issue the simulation reference configuration data, the simulation configuration data and data of a preset type to a detection interface of a hardware chip, and acquire an amount of hardware resources occupied by the simulation reference configuration data, the simulation configuration data and the data of the preset type calculated by the hardware chip, wherein the data of the preset type is data that has already occupied resources of the hardware chip other than the real configuration data;
a determination module, to determine, in response to determining that a total amount of resources of the hardware chip is greater than the amount of hardware resources, that the simulation is successful.

10. The apparatus of claim 9, further comprising:
a feedback module, to feed back a result that the simulation is successful to a control device;
wherein the issuing module is further to issue, in response to determining that an instruction of making simulation effective issued by the control device is received, the simulation configuration data to a real space of the network device.

11. The apparatus of claim 10, further comprising:
an updating module, to update, in response to determining that the simulation configuration data is successfully issued to the real space of the network device, the simulation reference configuration data based on the simulation configuration data.

12. The apparatus of claim 9, further comprising:
a deleting module, to delete, in response to determining that an instruction of abandoning the simulation configuration data sent by the control device is received, the simulation configuration data in the simulation space.

13. The apparatus of any one of claims 9-12, further comprising:
a receiving module, to receive data being immediately effective sent by the control device, wherein the data being immediately effective is simulation configuration data specified by the user which is forced to be effective or configuration data that does not support simulation functions;
wherein the issuing module is further to issue the data being immediately effective to the real space of the network device.

14. The apparatus of any one of claims 9-12, further comprising:
an exiting module, to exit, in response to determining that a simulation ending instruction sent by the control device is received or in response to determining that an operation of a user on the simulation space is not received within a specified duration, the simulation mode and delete the simulation reference configuration data and simulation configuration data in the simulation space.

15. The apparatus of claim 9, wherein the issuing module is specifically to:
issue, every time simulation configuration data is received, the simulation configuration data to the simulation space; or,
cache, every time simulation configuration data is received, the received simulation configuration data;
issue, in response to determining that a simulation submission instruction sent by the control device is received, the cached simulation configuration data to the simulation space.

16. The apparatus of claim 9, further comprising:
a simulation failure processing module, to:
generate, in response to determining that the total amount of resources of the hardware chip is less than the amount of hardware resources, a simulation failure log and delete the simulation configuration data; or,
feed back, in response to determining that the total amount of resources of the hardware chip is less than the amount of hardware resources, and a simulation failure reason is a specified reason, the specified reason to the control device to enable the control device to display prompt information including the specified reason to the user;
wherein the specified reason includes at least one of the following: a specified type of simulation configuration data is reissued, hardware resources of a virtual space to which the simulation space belongs are preempted by other virtual spaces, the hardware resources of the hardware chip are preempted by dynamic data generated by the network device, the hardware resources of the hardware chip are preempted by simulation configuration data that is forced to be effective, and the hardware resources of the hardware chip are preempted by configuration data that does not support simulation functions;
delete, in response to determining that an instruction of abandoning the simulation configuration data sent by the control device is received, the simulation configuration data.

17. A network device, comprising:
a processor;
a transceiver;
a machine readable storage medium storing machine executable instructions, which when executed by the processor, cause the processor to perform the following operations:
in response to entering a simulation mode, synchronizing real configuration data of the network device to a simulation space, and taking the real configuration data as simulation reference configuration data;
issuing simulation configuration data to the simulation space in the simulation mode, wherein the simulation space occupies memory resources of the network device;
issuing the simulation reference configuration data, the simulation configuration data and data of a preset type to a detection interface of a hardware chip, and acquiring an amount of hardware resources occupied by the simulation reference configuration data, the simulation configuration data and the data of the preset type calculated by the hardware chip, wherein the data of the preset type is data that has already occupied resources of the hardware chip other than the real configuration data;
determining that the simulation is successful in response to determining that a total amount of resources of the hardware chip is greater than the amount of hardware resources.

18. The network device of claim 17, wherein the machine executable instructions when being executed by the processor, further cause the processor to perform the following operations:
feeding back a result that the simulation is successful to a control device through the transceiver;
issuing, in response to determining that an instruction of making simulation effective issued by the control device is received through the transceiver, the simulation configuration data to a real space of the network device.

19. The network device of claim 18, wherein the machine executable instructions when being executed by the processor, further cause the processor to perform the following operations:
updating, in response to determining that the simulation configuration data is successfully issued to the real space of the network device, the simulation reference configuration data based on the simulation configuration data.

20. The network device of claim 17, wherein the machine executable instructions when being executed by the processor, further cause the processor to perform the following operations:
deleting, in response to determining that an instruction of abandoning the simulation configuration data sent by the control device is received through the transceiver, the simulation configuration data in the simulation space.

21. The network device of any one of claims 17-20, wherein the machine executable instructions when being executed by the processor, further cause the processor to perform the following operations:
receiving data being immediately effective sent by the control device through the transceiver, wherein the data being immediately effective is simulation configuration data specified by the user which is forced to be effective or configuration data that does not support simulation functions;
issuing the data being immediately effective to the real space of the network device.

22. The network device of any one of claims 17-20, wherein the machine executable instructions when being executed by the processor, further cause the processor to perform the following operations:
exiting, in response to determining that a simulation ending instruction sent by the control device is received through the transceiver or in response to determining that an operation of a user on the simulation space is not received within a specified duration, the simulation mode and deleting the simulation reference configuration data and simulation configuration data in the simulation space.

23. The network device of claim 17, wherein the machine executable instructions when being executed by the processor, further cause the processor to perform the following operations:
issuing, every time simulation configuration data is received through the transceiver, the simulation configuration data to the simulation space; or,
caching, every time simulation configuration data is received through the transceiver, the received simulation configuration data;
issuing, in response to determining that a simulation submission instruction sent by the control device is received through the transceiver, the cached simulation configuration data to the simulation space.

24. The network device of claim 17, wherein the machine executable instructions when being executed by the processor, further cause the processor to perform the following operations:
generating, in response to determining that the total amount of resources of the hardware chip is less than the amount of hardware resources, a simulation failure log and deleting the simulation configuration data; or,
feeding back, in response to determining that the total amount of resources of the hardware chip is less than the amount of hardware resources and a simulation failure reason is a specified reason, the specified reason to the control device to enable the control device to display prompt information including the specified reason to the user;
wherein the specified reason includes at least one of the following: a specified type of simulation configuration data is reissued, hardware resources of a virtual space to which the simulation space belongs are preempted by other virtual spaces, the hardware resources of the hardware chip are preempted by dynamic data generated by the network device, the hardware resources of the hardware chip are preempted by simulation configuration data that is forced to be effective, and the hardware resources of the hardware chip are preempted by configuration data that does not support simulation functions;
deleting, in response to determining that an instruction of abandoning the simulation configuration data sent by the control device is received through the transceiver, the simulation configuration data.

25. A machine readable storage medium storing machine executable instructions that, when called and executed by the processor, cause the processor to implement the method of any of claims 1-8.

26. A computer program product, wherein the computer program product causes the processor to implement the method of any one of claims 1-8.
